# EUROPEAN PATENT SPECIFICATION

(11) **EP 1 785 311 B1**
(45) Date of publication and mention of the grant of the patent: **03.09.2008**
(21) Application number: 05024659.4
(22) Date of filing: 11.11.2005
(51) Int. Cl.: B60M 1/30, B60L 5/38, B66C 13/00

(54) **Rail for a suspended vehicle**
Schiene für ein hängendes Fahrzeug
Rail pour un véhicule supendu

(43) Date of publication of application: 16.05.2007
(73) Proprietor: ROFA Rosenheimer Förderanlagen GmbH, 83059 Kolbermoor (DE)
(72) Inventor: Kittler, Manuela, 83059 Kolbermoor (DE); Meinzinger, Bruno, 81477 München (DE)
(74) Representative: Hartz, Nikolai

(56) References cited:
- DE-A1- 10 337 122
- DE-A1- 19 519 644
- US-A- 4 641 582

## Description

### Field of the Invention

The present invention relates to a rail means for an electrified monorail system with a suspended vehicle. Moreover, the present invention relates to an electrified monorail system comprising the rail means of the invention.

### Background of the Invention

A rail means according to the preamble of claim 1 is known from US 4,641,582. DE 103 37 122 discloses a further rail means for an electrified monorail system with a suspended vehicle.

Conventional electrified monorail systems used in the automotive industry require a significant headspace above ground so that the vehicle including any load and the rail means may be accommodated below the rail means. Moreover, vehicles suspended on such conventional rail means frequently extend above the rail means so that space above the rail means must be available for the vehicle during operation. Given the strict labor safety and load requirements applicable in the automotive industry, conventional rail means are therefore mounted on dedicated support structures.

### Summary of the Invention

lt is the problem of the invention to provide a cost effective rail means for an electrified monorail system which may be used without a dedicated support structure and which may be used even in cases when headspace is limited.

This problem is solved according to the present invention by a rail means for an electrified monorail system with a suspended vehicle, which comprises an elongated body having a longitudinal axis, and a second axis perpendicular to the longitudinal axis, whereby the elongated body comprises
a) a central wall means extending essentially parallel to the longitudinal axis and the second axis of the elongated body, said central wall means defining
   a1) a first side wall of a first channel for receiving one or more support wheels and one or more guide rollers of a vehicle, the channel having
      - a support surface parallel to the longitudinal axis and perpendicular to the second axis for supporting a support wheel, and
      - one or more first guiding surfaces for guiding a guide rollers of a vehicle; and
   a2) a second side wall of a second channel for receiving one or more conductor bars extending parallel to the longitudinal axis of the elongated body, and
b) one or more attachment grooves having recess portions, which are provided at the upper end of the central wall means for attachment of the rail below a support structure.

### Description of the preferred Embodiments

In a preferred embodiment, the distance between the support surface and a contact surface of the rail means contacting the support structure is in the range of from 90 to 175 mm, more preferably 100 to 150 mm, most preferably 105 to 120 mm. Accordingly, the rail means of the present invention is significantly more compact than conventional rail means used in the automotive industry. The overall dimensions of the cross section of the rail means according to the invention are in the range of from 100 to 180 mm, more preferably 120 to 160, in height and 50 to 90 mm in width. The central wall means preferably has a thickness in the range of from 4.5 to 5.5 mm.

The elongated body may further comprise a third channel for receiving guide roller, which has one or more second guiding surfaces for guiding guide rollers of a vehicle.

The first guiding surface of the first channel may extend essentially parallel to the longitudinal axis and the second axis of the elongated body.

The second channel for receiving one or more conductor bars extending parallel to the longitudinal axis of the elongated body may comprise a conductor bar assembly engaging the second channel at recess portions.

Two attachment grooves may be are provided which have recess portions capable of receiving and engaging attachment means for attachment of the rail below a support structure.

A third channel for receiving guide rollers may furthermore be provided adjacent to the support surface so that a second guiding surface for guiding guide rollers of a vehicle is contiguous with the support surface and extends parallel to the longitudinal axis and the second axis.

The rail means according to the invention may be made of any suitable material, preferably a metal such as aluminum.

An electrified monorail system comprising a rail means according to any one of the preceding claims and a vehicle.

The invention will now be further illustrated with reference to the attached figures.

Figure 1 shows a cross-sectional view of a rail means according to the present invention.

Figure 2 shows a cross-sectional view of the rail mean and a corresponding vehicle.

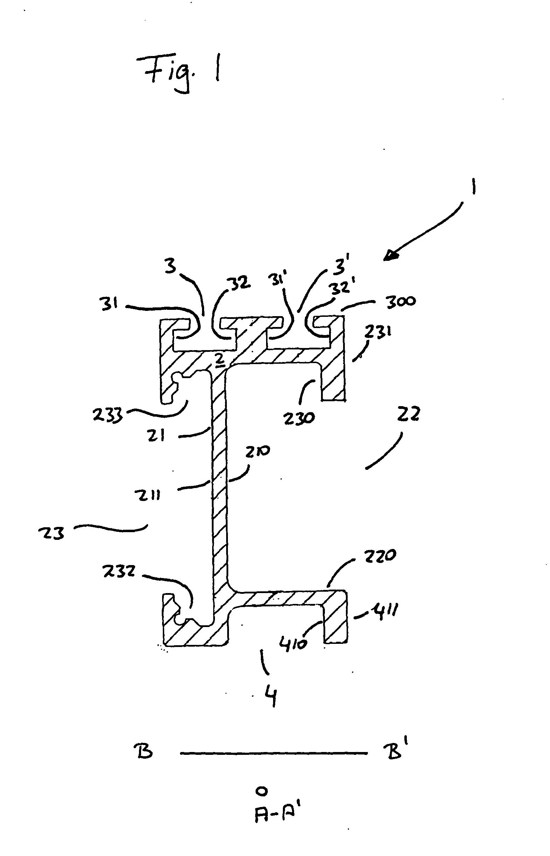

As shown by figure 1, the rail means 1 for an electrified monorail system with a suspended vehicle according to the invention comprises an elongated body 2. The elongated body 2 has a longitudinal axis A-A', and a second axis B-B' perpendicular to the longitudinal axis. The elongated body 2 comprises a central wall means 21 extending essentially parallel to the longitudinal axis and the second axis of the elongated body 2.

The central wall means defines a first side wall 210 of a first channel 22 for receiving one or more support wheels and one or more guide rollers of a vehicle.

The channel 22 comprises a support surface 220 parallel to the longitudinal axis A-A' and perpendicular to the second axis B-B' for supporting a support wheel. The channel 22 further comprises one or more first guiding surfaces 230, 231 for guiding a guide roller of a vehicle. The first guiding surface 230, 231 of the first channel 22 extends essentially parallel to the longitudinal axis and the second axis of the elongated body 2.

The central wall means further defines a second side wall 211 of a second channel 23 for receiving one or more conductor bars extending parallel to the longitudinal axis of the elongated body 2. The second channel 23 for receiving one or more conductor bars extending parallel to the longitudinal axis of the elongated body 2 comprises a conductor bar assembly engaging the second channel 23 at recess portions 232, 233.

The elongated body 2 further comprises attachment grooves 3, 3' having recess portions 31, 32, 31', 32'. The attachment grooves 3, 3' are provided at the upper end of the central wall means for attachment of the rail below a support structure.

The elongated body 2 further comprises a third channel 4 for receiving guide roller, which has one or more second guiding surfaces 410, 411 for guiding guide rollers of a vehicle. The third channel 4 for receiving guide roller is provided adjacent to the support surface 220 so that a second guiding surface 410, 411 for guiding guide rollers of a vehicle is contiguous with the support surface 220 and extends parallel to the longitudinal axis A-A' and the second axis B-B'.

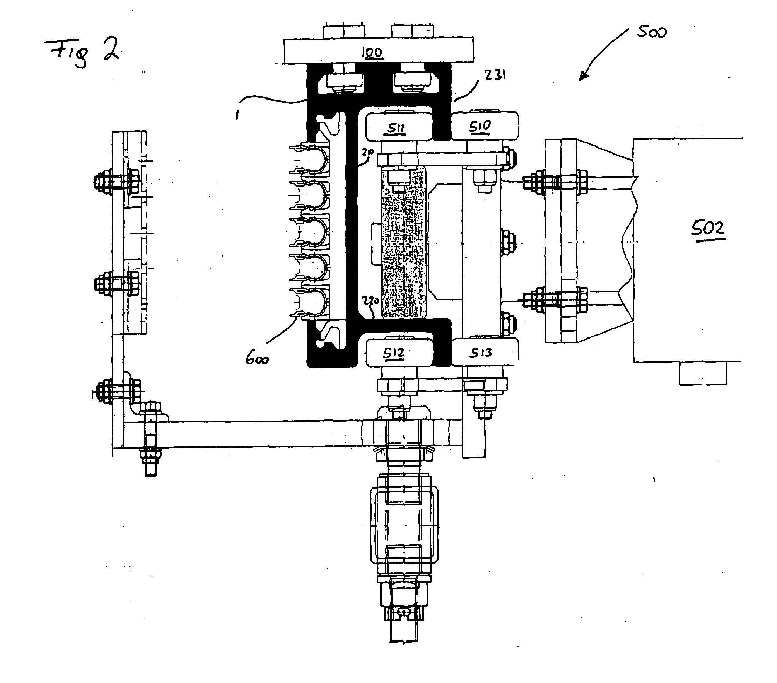

As shown by figure 2, the rail means of figure 1 may be mounted underneath a conventional support beam 100. For this purpose, the elongated body 2 comprises attachment grooves 3, 3' having recess portions 31, 32, 31', 32'. The attachment grooves 3, 3' are provided at the upper end of the central wall means for attachment of the rail below a support structure by conventional means such as a screw connection.

The suspended vehicle 500 engages the rail means 1 with a support wheel 501 which may be driven by using drive means 502. The support wheels is received in a first channel 22 limited laterally by a side wall of the central wall means. The channel 22 comprises a support surface 220 parallel to the longitudinal axis A-A' and perpendicular to the second axis B-B' for supporting the support wheel 501. Moreover, the suspended vehicle further comprises guide rollers 510-513. Guide roller 511 is also received in the first channel 22. For this purpose, the channel 22 further comprises one or more first guiding surfaces 230, 231 for guiding the guide rollers of the vehicle 500. The first guiding surface 230, 231 of the first channel 22 extends essentially parallel to the longitudinal axis and the second axis of the elongated body 2.

The central wall means further defines a second side wall 211 of a second channel 23 for receiving one or more conductor bars extending parallel to the longitudinal axis of the elongated body 2. The second channel 23 contain conductor bars extending parallel to the longitudinal axis of the elongated body 2. A conductor bar assembly 600 engaging the second channel 23 at recess portions 232, 233 is provided for controlling the suspended vehicle and providing energy to the drive means 502.

The elongated body 2 further comprises a third channel 4 for receiving a guide roller 512, which has second guiding surfaces 410, 411 for guiding guide rollers 512, 513 of the vehicle 500. The third channel 4 for receiving guide roller is provided adjacent to the support surface 220.

The electrified monorail system according to the invention may be preferably used for transporting loads of up to 300 kg.

## Claims

1. A rail means (1) for an electrified monorail system with a suspended vehicle, which comprises an elongated body (2) having a longitudinal axis (A-A'), and a second axis (B-B') perpendicular to the longitudinal axis, whereby the elongated body (2) comprises
(a) a central wall means (21) extending essentially parallel to the longitudinal axis and the second axis of the elongated body (2), said central wall means defining
(a1) a first side wall (210) of a first channel (22) for receiving one or more support wheels and one or more guide rollers of a vehicle, and
(a2) a second side wall (211) of a second channel (23) for receiving one or more conductor bars extending parallel to the longitudinal axis of the elongated body (2),
**characterized in that**
the first channel (22) having
- a support surface (220) parallel to the longitudinal axis (A-A') and perpendicular to the second axis (B-B') for supporting a support wheel, and
- one or more first guiding surfaces (230, 231) for guiding a guide rollers of a vehicle, and
**in that** the elongated body (2) further comprises
(b) one or more attachment grooves (3, 3') having recess portions (31, 32, 31', 32'), which are provided at the upper end of the central wall means for attachment of the rail below a support structure.

2. The rail means (1) of claim 1, wherein the distance between the support surface (220) and a contact surface (300) of the rail means contacting the support structure is in the range of from 90 to 175 mm.

3. The rail means (1) of claim 1 or 2, wherein the elongated body (2) further comprises a third channel (4) for receiving guide roller, which has one or more second guiding surfaces (410, 411) for guiding guide rollers of a vehicle.

4. The rail means (1) according to any one of the preceding claims, wherein the first guiding surface (230, 231) of the first channel (22) extends essentially parallel to the longitudinal axis and the second axis of the elongated body (2).

5. The rail means (1) according to any one of the preceding claims, wherein the second channel (23) for receiving one or more conductor bars extending parallel to the longitudinal axis of the elongated body (2) comprises a conductor bar assembly engaging the second channel (23) at recess portions (232, 233).

6. The rail means (1) according to any one of the preceding claims, wherein two attachment grooves (3, 3') are provided which have recess portions (31, 32, 31', 32') capable of receiving and engaging attachment means for attachment of the rail below a support structure.

7. The rail means (1) according to any one of the preceding claims, wherein the third channel (4) for receiving guide roller is provided adjacent to the support surface (220) so that a second guiding surface (410, 411) for guiding guide rollers of a vehicle is contiguous with the support surface (220) and extends parallel to the longitudinal axis (A-A') and the second axis (B-B').

8. The rail means according to any one of the preceding claims, which is made of aluminum.

9. The rail means according to any one of the preceding claims, wherein the overall dimensions of the cross section are in the range of from 100 to 180 mm in height and 50 to 90 mm in width.

10. The rail means according to any one of the preceding claims, wherein the central wall means has a thickness in the range of from 4.5 to 5.5 mm.

11. An electrified monorail system comprising a rail means according to any one of the preceding claims and a vehicle.

12. Use of the electrified monorail system according to claim 11 for transporting loads of up to 300 kg.

## Patentansprüche

1. Schienenkonstruktion (1) für ein elektrifiziertes Einschienensystem mit einem hängenden Fahrzeug, das einen länglichen Körper (2) aufweist, der eine Längsachse (A-A') aufweist, und eine zur Längsachse senkrechte zweite Achse (B-B'), wobei de längliche Körper (2) umfasst
(a) ein zentrales Wandelement (21), das im wesentlichen parallel zur Längsachse und zur zweiten Achse des länglichen Körpers (2) verläuft, wobei das zentrale Wandelement definiert
(a1) eine erste Seitenwand (210) eines ersten Kanals (22) zur Aufnahme eines oder mehrerer Stützräder und einer oder mehrerer Führungsrollen eines Fahrzeugs, und
(a2) eine zweite Seitenwand (211) eines zweiten Kanals (23) zur Aufnahme einer oder mehrerer Leiterschiene(n), die parallel zur Längsachse des länglichen Körpers (2) verläuft/verlaufen,
**dadurch gekennzeichnet,**
**dass** der erste Kanal (22) aufweist
- eine zur Längsachse (A-A') parallele und zur zweiten Achse (B-B') senkrechte Trägerfläche (220) zur Unterstützung eines Stützrades, und
- eine oder mehrere Führungsflächen (230, 231) zum Führen von Führungsrollen eines Fahrzeugs, und
**dadurch**, dass der längliche Körper (2) ferner aufweist
(b) eine oder mehrere Halterungskanäle (3, 3'), die Ausbuchtungen (31, 32, 31', 32') aufweisen, die am oberen Ende des zentralen Wandelements zum Anbringen der Schiene unterhalb einer Trägerstruktur vorgesehen sind.

2. Schienenkonstruktion (1) nach Anspruch 1, worin der Abstand zwischen der Trägerfläche (220) und einer Kontaktfläche (300) der Schienenkonstruktion, die die Trägerstruktur kontaktiert, im Bereich von 90 bis 175 mm liegt.

3. Schienenkonstruktion (1) nach Anspruch 1 oder 2, worin der längliche Körper (2) ferner einen dritten Kanal (4) zur Aufnahme von Führungsrollen aufweist, der eine oder mehrere zweite Führungsflächen (410, 411) zum Führen von Führungsrollen eines Fahrzeugs aufweist.

4. Schienenkonstruktion (1) nach einem der vorhergehenden Ansprüche, worin die erste Führungsfläche (230, 231) des ersten Kanals (22) im wesentlichen parallel zur Längsachse und zur zweiten Achse des länglichen Körpers (2) verläuft.

5. Schienenkonstruktion (1) nach einem der vorhergehenden Ansprüche, worin der zweite Kanal (23) zur Aufnahme von einem oder mehreren Leiterschienen, die parallel zur Längsachse des länglichen Körpers (2) verlaufen, ein Leiterschienensystem umfasst, das in den zweiten Kanal (23) an Ausbuchtungen (232, 233) eingreift.

6. Schienenkonstruktion (1) nach einem der vorhergehenden Ansprüche, worin zwei Halterungskanäle (3, 3') vorgesehen sind, die Ausbuchtungen (31, 32, 31', 32') aufweisen, die zur Aufnahme von und zum Eingreifen in Halterungselemente zur Befestigung der Schiene unterhalb einer Stützstruktur fähig sind.

7. Schienenkonstruktion (1) nach einem der vorhergehenden Ansprüche, worin der dritte Kanal (4) zur Aufnahme von Führungsrollen benachbart zur Trägerfläche (220) so vorgesehen ist, dass eine zweite Führungsfläche (410, 411) zum Führen von Führungsrollen eines Fahrzeugs mit der Trägerfläche (220) zusammenhängt und parallel zur Längsachse (A-A') und zur zweiten Achse (B-B') verläuft.

8. Schienenkonstruktion nach einem der vorhergehenden Ansprüche, die aus Aluminium hergestellt ist.

9. Schienenkonstruktion nach einem der vorhergehenden Ansprüche, worin die Gesamtdimensionen des Querschnitts im Bereich von 100 bis 180 mm Höhe und 50 bis 90 mm Breite liegen.

10. Schienenkonstruktion nach einem der vorhergehenden Ansprüche, worin das zentrale Wandelement eine Dicke im Bereich von 4,5 bis 5,5 mm aufweist.

11. Elektrifiziertes Einschienensystem, das eine Schienenkonstruktion nach einem der vorhergehenden Ansprüche und ein Fahrzeug aufweist.

12. Verwendung des elektrifizierten Einschienensystems nach Anspruch 11 zum Transport von Lasten bis zu 300 kg.

## Revendications

1. Moyen formant rail (1) pour un système de monorail électrifié comportant un véhicule suspendu, qui comprend un corps allongé (2) ayant un axe longitudinal (A - A') et un second axe (B - B') perpendiculaire à l'axe longitudinal, de sorte que le corps allongé (2) comprend :
(a) un moyen formant paroi centrale (21) s'étendant sensiblement parallèlement à l'axe longitudinal et au second axe du corps allongé (2), ledit moyen formant paroi centrale définissant :
(a1) une première paroi latérale (210) d'un premier profilé (22) pour recevoir une ou plusieurs roues de support et un ou plusieurs rouleaux de guidage d'un véhicule, et
(a2) une seconde paroi latérale (211) d'un deuxième profilé (23) pour recevoir une ou plusieurs barres conductrices s'étendant parallèlement à l'axe longitudinal du corps allongé (2),
**caractérisé en ce que**
le premier profilé (22) possède
- une surface de support (220) parallèle à l'axe longitudinal (A - A') et perpendiculaire au second axe (B - B') pour supporter une roue de support, et
- une ou plusieurs premières surfaces de guidage (230, 231) pour guider les rouleaux de guidage d'un véhicule, et
**en ce que** le corps allongé (2) comprend en outre :
(b) une ou plusieurs rainures de fixation (3, 3') ayant des parties en retrait (31, 32, 31', 32'), qui sont disposées au niveau de l'extrémité supérieure du moyen formant paroi centrale pour la fixation du rail au-dessous d'une structure de support.

2. Moyen formant rail (1) selon la revendication 1, dans lequel la distance entre la surface de support (220) et une surface de contact (300) du moyen formant rail entrant en contact avec la structure de support est dans la plage de 90 à 175 mm.

3. Moyen formant rail (1) selon la revendication 1 ou 2, dans lequel le corps allongé (2) comprend en outre un troisième profilé (4) pour recevoir un rouleau de guidage, qui comporte une ou plusieurs secondes surfaces de guidage (410, 411) pour guider les rouleaux de guidage d'un véhicule.

4. Moyen formant rail (1) selon l'une quelconque des revendications précédentes, dans lequel la première surface de guidage (230, 231) du premier profilé (22) s'étend sensiblement parallèlement à l'axe longitudinal et au second axe du corps allongé (2).

5. Moyen formant rail (1) selon l'une quelconque des revendications précédentes, dans lequel le deuxième profilé (23) pour recevoir une ou plusieurs barres conductrices s'étendant parallèlement à l'axe longitudinal du corps allongé (2) comprend un ensemble formant barre conductrice mettant en prise le deuxième profilé (23) au niveau de parties en retrait (232, 233).

6. Moyen formant rail (1) selon l'une quelconque des revendications précédentes, dans lequel deux rainures de fixation (3, 3') sont prévues, qui possèdent des parties en retrait (31, 32, 31', 32') susceptibles de recevoir et de mettre en prise un moyen de fixation pour la fixation du rail au-dessous d'une structure de support.

7. Moyen formant rail (1) selon l'une quelconque des revendications précédentes, dans lequel le troisième profilé (4) pour recevoir un rouleau de guidage est disposé adjacent à la surface de support (220) de sorte qu'une seconde surface de guidage (410, 411) pour guider les rouleaux de guidage d'un véhicule est contiguë avec la surface de support (220) et s'étend parallèlement à l'axe longitudinal (A - A') et au second axe (B - B').

8. Moyen formant rail selon l'une quelconque des revendications précédentes, qui est réalisé en aluminium.

9. Moyen formant rail selon l'une quelconque des revendications précédentes, dans lequel les dimensions globales de la section transversale sont dans la plage de 100 à 180 mm en hauteur et de 50 à 90 mm en largeur.

10. Moyen formant rail selon l'une quelconque des revendications précédentes, dans lequel le moyen formant paroi centrale a une épaisseur dans la plage de 4,5 à 5,5 mm.

11. Système de monorail électrifié comprenant un moyen formant rail selon l'une quelconque des revendications précédentes et un véhicule.

12. Utilisation du système de monorail électrifié selon la revendication 11 pour transporter des charges allant jusqu'à 300 kg.
